# EUROPÄISCHE PATENTSCHRIFT

(11) **EP 3 526 564 B1**
(45) Veröffentlichungstag und Bekanntmachung des Hinweises auf die Patenterteilung: **11.11.2020**
(21) Anmeldenummer: 17777797.6
(22) Anmeldetag: 13.09.2017
(51) Int. Cl.: G01K 1/14, G01K 1/16

(54) **ANLEGETEMPERATURMESSFÜHLER**
CONTACT TEMPERATURE SENSOR
SONDE DE TEMPÉRATURE D'APPLICATION

(30) Priorität: 12.10.2016 DE 102016119430
(43) Veröffentlichungstag der Anmeldung: 21.08.2019
(73) Patentinhaber: TDK Electronics AG, 81671 München (DE)
(72) Erfinder: HAND, Thomas, 12489 Berlin (DE)
(74) Vertreter: Epping - Hermann - Fischer
(86) Internationale Anmeldenummer: PCT/EP2017/073037
(87) Internationale Veröffentlichungsnummer: WO 2018/068977

(56) Entgegenhaltungen:
- EP-A1- 0 692 704
- US-A- 4 265 117

## Beschreibung

Die Erfindung betrifft einen Anlegetemperaturmessfühler mit einem Temperatursensorelement zum Erfassen einer Temperatur.

Als Anlegetemperaturmessfühler werden elektrische Temperaturfühler bezeichnet, bei denen die Wärmeübertragung zwischen Prüfobjekt und Messfühler nur über eine bestimmte Anlegefläche erfolgt. Anlegetemperaturmessfühler werden häufig genutzt zur indirekten Temperaturmessung von Flüssigkeiten in Rohren. Werden die Anlegetemperaturmessfühler an schlecht wärmeleitende Rohre angelegt, erhöht sich die Ansprechzeit der Sensorelemente der Anlegetemperaturmessfühler und vorgegebene Ansprechzeitanforderungen für bestimmte Anwendungen, zum Beispiel im Bereich weißer Ware, können nicht eingehalten werden.

EP 0 692 704 A1 offenbart einen Temperaturmessfühler für ein Wärmetauscher-Strömungsrohr, der ein Gehäuse mit einem dünnen Wärmeübertragungswandabschnitt, der z. B. in wärmeleitendem Eingriff mit einem Strömungsrohr steht, und einen relativ dicken, wärmeisolierenden strukturellen Stützwandabschnitt umfasst.

Die Aufgabe, die der Erfindung zu Grunde liegt, ist es, einen Anlegetemperaturmessfühler zu schaffen, der einen ausreichend guten Wärmetransport von einem Prüfkörper zu einem Sensorelement des Anlegetemperaturmessfühler ermöglicht.

Die Aufgabe wird gelöst durch die Merkmale des unabhängigen Patentanspruchs. Vorteilhafte Weiterbildungen der Erfindung sind in den Unteransprüchen gekennzeichnet.

Die Erfindung zeichnet sich aus durch einen Anlegetemperaturmessfühler mit einem Anlegekörper. Der Anlegekörper weist eine Bodenwandung zum Anlegen des Anlegetemperaturmessfühlers an einen Prüfkörper auf. Ferner umfasst der Anlegekörper ein Wärmeleitblech oder eine Wärmeleitfolie, das beziehungsweise die auf einer dem Prüfkörper zugewandten Seite der Bodenwandung angeordnet ist und derart ausgebildet ist, dass es beziehungsweise sie sich bei einem Anlegen des Anlegekörpers an das Prüfobjekt an eine Oberflächenform des Prüfkörpers anpasst. Des Weiteren weist der Anlegekörper ein Temperatursensorelement und ein Wärmeleitpad auf. Das Wärmeleitpad ist angeordnet und ausgebildet, das Temperatursensorelement und das Wärmeleitblech beziehungsweise die Wärmeleitfolie thermisch zu koppeln, wobei das Wärmeleitpad jeweils direkt thermisch gekoppelt ist mit dem Wärmeleitblech und dem Temperatursensorelement.

Der Prüfkörper umfasst beispielsweise ein Rohr. Im Inneren des Rohres kann ein Fluid, beispielsweise ein Kühlmittel, fließen oder auch ruhend vorhanden sein.

Das Wärmeleitblech ist insbesondere ausgebildet, sich an verschiedene Rundungen von rohrförmigen Prüfkörpern anzupassen. Dies hat den Vorteil, dass der Anlegekörper für Prüfkörper mit verschiedenen Rohdurchmessern genutzt werden kann.

Das Wärmeleitblech ermöglicht vorteilhafterweise einen flächigen Wärmeübergang von der Oberfläche des Prüfkörpers an das Wärmeleitpad, wodurch ein schneller Wärmetransport von dem Prüfkörper zu dem Wärmeleitpad ermöglicht wird. Vorzugsweise werden eine Fläche und/oder eine Dicke des Wärmeleitbleches so gewählt, dass eine Wärmekapazität des Wärmeleitbleches nicht die Vorteile des schnellen Wärmetransports überkompensiert.

Das Wärmleitpad ist insbesondere kissenartig ausgebildet und weist weiches, formbares, wärmeleitfähiges Material auf. Im Vergleich zu einer Wärmeleitpaste härtet das Material des Wärmeleitpads nicht aus. Das Wärmeleitpad ist beispielsweise rückfedernd ausgebildet. Abhängig von jeweiligen Abmessungen in Bezug auf Form und Dicke des Wärmeleitpads und Materialeigenschaften des Wärmeleitpads können geforderte oder gewünschte Ansprechzeiten des Anlegetemperaturmessfühlers realisiert werden.

Somit sind sowohl das Wärmleitpad als auch das Wärmeleitblech ausgebildet, ihre Form an die Oberflächenform des Prüfkörpers anzupassen. Insbesondere kann diese Anpassung wiederholt erfolgen. Da das Wärmeleitpad auch im montierten Zustand des Anlegetemperaturmessfühlers flexibel bleibt, können sich das Wärmeleitbleich und das Wärmeleitpad gemeinsam auch an eine, insbesondere wiederholte, Änderung der Oberflächenform des Prüfkörpers zum Beispiel aufgrund einer thermischen Expansion oder Kontraktion des Prüfkörpers, anpassen.

Durch den verbesserten Wärmeübergang von der Oberfläche des Prüfkörpers zum Thermosensorelement können schneller Ansprechzeiten des Anlegetemperaturmessfühlers realisiert werden.

In einer vorteilhaften Ausgestaltung ist das Temperatursensorelement eingesteckt in das Wärmeleitpad. Vorzugsweise ist das Temperatursensorelement in das Wärmeleitpad nur eingesteckt, das heißt nicht mittels einer Verbindung, die durch ein stoffschlüssiges Fügeverfahren hergestellt wird, wie zum Beispiel eine Klebeverbindung, mit dem Wärmeleitpad verbunden. Dies ermöglicht eine flexible Anpassung des Anlegekörpers an die Oberflächenform des Prüfkörpers, da zusätzlich zu der Anpassung der Form des Wärmeleitblechs und des Wärmepads eine Anpassung einer Position und/oder Anordnung des Thermosensorelements in dem Wärmeleitpad erfolgen kann, beispielsweise beim Andrücken des Anlegekörpers an den Prüfkörper.

In einer weiteren vorteilhaften Ausgestaltung weist der Anlegekörper einen Hohlraum mit einer Öffnung auf. Die Öffnung ist in der Bodenwandung angeordnet und wird zumindest teilweise von dem Wärmeleitblech abgedeckt. Das Temperatursensorelement und das Wärmeleitpad sind zumindest teilweise in dem Hohlraum angeordnet und das Temperatursensorelement ist zu einem Teil direkt von dem Wärmeleitpad umgeben und ansonsten in dem Hohlraum von Luft umgeben. Die Luft wirkt als thermischer Isolator, sodass eine Wärmeenergie des Temperatursensorelements nur minimal abtransportiert wird.

Abhängig von einem Volumen des verbleibenden Raumes des Hohlraumes, der mit Luft gefüllt ist, können unterschiedliche Ansprechzeiten des Anlegetemperaturmessfühlers realisiert werden. Das Volumen des verbleibenden Raumes des Hohlraumes, der mit Luft gefüllt ist, kann auch als Luftspaltmaß bezeichnet werden. Das Luftspaltmaß kann jeweils abhängig von den geforderten oder gewünschten Ansprechzeiten variiert werden.

In einer weiteren vorteilhaften Ausgestaltung umfasst das Temperatursensorelement einen Heißleiter. Der Heißleiter kann auch als NTC-Widerstand (*Negative-Temperature-Coefficient-Widerstand*) bezeichnet werden. Der Heißleiter weist einen Widerstand mit einem negativen Temperaturkoeffizienten auf. Der Heißleiter ermöglicht vorteilhafterweise, dass eine Temperatur oder eine Temperaturänderung an der Oberfläche des Prüfobjekts sehr einfach und kostengünstig erfasst werden kann.

In einer weiteren vorteilhaften Ausgestaltung umfasst das Temperatursensorelement einen glasbeschichteten oder einen epoxidharzbeschichteten Heißleiter. Die Glasbeschichtung des Heißleiters ist vorzugsweise derart ausgebildet, dass der Heißleiter resistent gegenüber Feuchtigkeit und/oder anderen Umwelteinflüssen ist und somit das Temperatursensorelement eine erhöhte Zuverlässigkeit aufweist. Insbesondere verhindert die Glasbeschichtung ein Eindringen von Feuchtigkeit in den Heißleiter.

In einer weiteren vorteilhaften Ausgestaltung ist das Wärmeleitblech vorgebogen, so dass es eine Rundung mit einem vorgegebenen Radius aufweist, und weist Federeigenschaften auf. Das vorgerundete federnde Wärmeleitblech hat den Vorteil, dass es sich passgenau an Rohre mit unterschiedliche Rohrdurchmesser anschmiegen kann. Die vorgegebene Rundung ist vorzugsweise größer als eine Rundung der Prüfkörper.

In einer weiteren vorteilhaften Ausgestaltung weist der Anlegetemperaturfühler eine Halteklammer für den Heißleiter auf, die in dem Hohlraum des Anlegekörpers angeordnet ist und die angeordnet und ausgebildet ist, das Temperatursensorelement in einer vorgegebenen Position zu halten.

In einer weiteren vorteilhaften Ausgestaltung ist die Halteklammer federnd ausgebildet. Dies ermöglicht, den Heißleiter, insbesondere einen Teil des Heißleiters, der das Widerstandsmaterial und/oder die Widerstandsstrukturen des Heißleiters umfasst, in einer messtechnisch optimalen Position zu halten. Der Teil des Heißleiters, der das Widerstandsmaterial und/oder die Widerstandsstrukturen des Heißleiters umfasst, kann auch als NTC-Kopf bezeichnet werden. Ausführungsbeispiele der Erfindung sind im Folgenden anhand der schematischen Zeichnungen erläutert.

Es zeigen:
Figur 1 eine Schnittansicht eines Ausführungsbeispiels eines Anlegetemperaturmessfühlers und
Figur 2 eine erste Schnittansicht eines Ausführungsbeispiels eines Anlegekörpers des Anlegetemperaturmessfühlers,

Elemente gleicher Konstruktion oder Funktion sind figurenübergreifend mit den gleichen Bezugszeichen versehen.

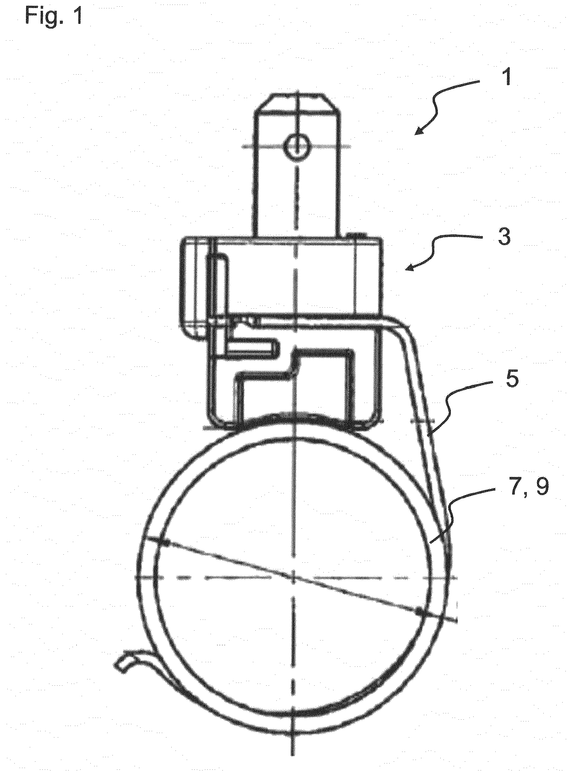

Figur 1 zeigt eine Schnittansicht eines Ausführungsbeispiels eines Anlegetemperaturmessfühlers 1. Der Anlegetemperaturmessfühler 1 weist einen Anlegekörper 3 und beispielsweise eine Spannklemme 5 auf. Ein Ende der Spannklemme 5 ist beispielsweise mit dem Anlegekörper 3 mechanisch gekoppelt. Die Spannklemme 5 ist angeordnet und ausgebildet, den Anlegekörper 3 an einen Prüfkörper 7 anzudrücken und den Anlegekörper 3 an dem Prüfkörper 7 zu fixieren. Alternativ kann der Anlegetemperaturmessfühler 1 ein Spannband aufweisen, das mit seinen beiden Enden jeweils an dem Anlegekörper 3 befestigt ist. Vorzugsweise ist eine Länge des Spannbandes einstellbar.

In dem gezeigten Ausführungsbeispiel ist der Anlegetemperaturmessfühler 1 an einem Prüfkörper 7 in Form eines Rohres 9 montiert. Im Inneren des Rohres 9 kann ein hier nicht dargestelltes Fluid, beispielsweise ein Kühlmittel, fließen oder auch ruhend vorhanden sein. Der Anlegetemperaturfühler kann genutzt werden, die Temperatur des Fluids zu ermitteln. Der Anlegetemperaturmessfühler 1 umfasst ein Temperatursensorelement 30, das in thermischem Kontakt mit dem Rohr 9 steht. Der Anlegekörper 3 weist ein Steckergehäuse 13 auf. Im Innern des Steckergehäuses 13 ist ein Kontaktstift 15 angeordnet, der über leitende Verbindungen mit dem Temperatursensorelement 30 verbunden ist.

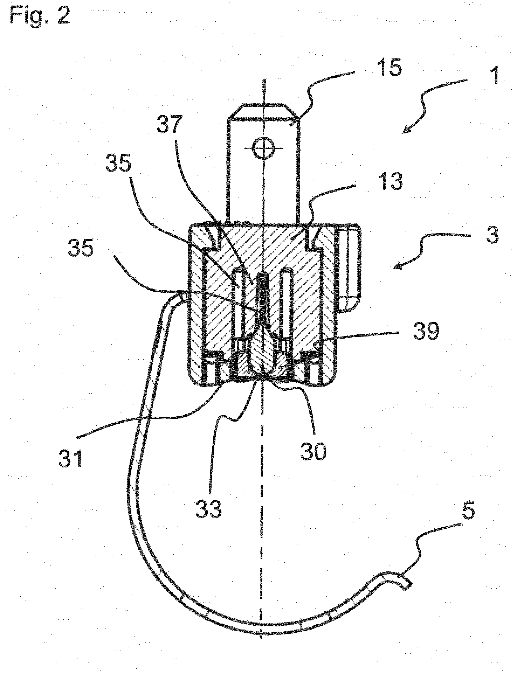

Figur 2 zeigt eine erste Schnittansicht eines Ausführungsbeispiels des Anlegekörpers 3 im Detail. Der Anlegekörper 3 weist eine Bodenwandung 31 auf zum Anlegen des Anlegetemperaturmessfühlers 1 an den Prüfkörper 7. Auf einer dem Prüfkörper 7 zugewandten Seite der Bodenwandung 31 ist ein Wärmeleitblech 33 angeordnet. Vorzugsweise ist das Wärmeleitblech derart an der Bodenwandung angeordnet, dass die Bodenwandung 31 keinen direkten Kontakt zum Prüfkörper 7 hat sondern nur das Wärmeleitblech 33. Alternativ kann auf der dem Prüfkörper 7 zugewandten Seite der Bodenwandung 31 eine Wärmeleitfolie angeordnet sein. Das Wärmeleitblech 33 umfasst vorzugsweise Kupfer oder besteht aus Kupfer. Beispielsweise kann das Wärmeleitblech eine Beschichtung, die Kupfer aufweist, umfassen. Zum Beispiel kann das Wärmeleitblech eine Nickelbeschichtung aufweisen. Das Wärmeleitblech 33 ist flexibel ausgebildet, so dass es sich an eine Oberflächenform des Prüfkörpers 7 zumindest teilweise anschmiegen kann. Das Wärmeleitblech 33 ist beispielsweise derart ausgebildet und angeordnet, dass es sich an die Rundung von rohrförmigen Prüfkörpern 7 mit unterschiedlichen Rohrdurchmessern anschmiegt. Hierzu kann das Wärmeleitblech 33 vorgebogen ausgebildet sein, wobei das Wärmeleitblech 33 eine Rundung mit einem vorgegebenen Radius aufweist. Eine Blechstärke des Wärmeleitblechs 33 ist vorzugsweise so gewählt, dass das Wärmeleitblech 33 Federeigenschaften aufweist.

Der Anlegekörper 3 weist einen Hohlraum 35 mit einer Öffnung auf, in dem ein Wärmeleitpad 39 und das Temperatursensorelement 30 zumindest teilweise angeordnet sind. Die Öffnung ist in der Bodenwandung 31 des Anlegekörpers 3 angeordnet und wird zumindest zum Teil von dem Wärmeleitblech 33 abgedeckt oder verschlossen.

Vorzugsweise ist das Temperatursensorelement 30 in das Wärmeleitpad 39 eingesteckt. Zum Halten des Temperatursensorelements 30 in einer gewünschten Messposition sind in dem Anlegekörper 3 beispielsweise eine Halteklammer oder mehrere Halteklammern angeordnet . Die Haltklammern sind beispielsweise schnabelartig ausgebildet und bestehen aus einem Kunststoff oder bestehen teilweise aus Kunststoff. Je nach Wandstärke der jeweiligen Halteklammer, insbesondere der "Schnäbel" kann die jeweilige Halteklammer auch federnd wirken.

Das Temperatursensorelement 30 ist außerhalb des Einsteckbereichs, in dem es direkt an dem Wärmeleitpad 39 anliegt, vorzugsweise von Luft umgeben. Der Hohlraum 35 bildet somit eine Luftkammer für das Temperatursensorelement 30. Die Luft wirkt als thermischer Isolator, sodass eine Wärmeenergie des Temperatursensorelements 30 nur minimal abtransportiert wird.

Das Wärmeleitpad 39 ist insbesondere kissenartig ausgebildet und weist weiches, formbares, wärmeleitfähiges Material auf. Das Wärmeleitpad 39 ist beispielsweise rückfedernd ausgebildet.

Das Temperatursensorelement 30 ist in einem montierten Zustand, bei dem der Anlegetemperaturmessfühler 1 an dem Prüfkörper 7 anliegt, über das Wärmeleitpad 39 und das Wärmeleitblech 33 thermisch gekoppelt mit dem Prüfkörper 7.

Das Wärmeleitpad 39 ist teilweise in der Öffnung der Bodenwandung 31 des Anlegekörpers 3 angeordnet und koppelt das Wärmeleitblech 33 thermisch mit dem Temperatursensorelement 30.

Vorzugsweise ist eine dem Prüfkörper 7 abgewandte Seite des Wärmeleitblechs 33 mindestens teilweise in direktem Kontakt mit dem Wärmeleitpad 39 und das Wärmeleitpad 39 ist somit vorzugsweise direkt thermisch gekoppelt mit dem Wärmeleitblech 33. Thermisch direkt gekoppelt bedeutet, dass keine Schicht, die den Wärmefluss beeinflusst oder merklich beeinflusst, beispielweise eine Klebeschicht und/oder Wärmeleitpaste, zwischen dem Wärmeleitpad 39 und dem Wärmeleitblech 33 angeordnet ist.

Das Temperatursensorelement 30 umfasst vorzugsweise einen Heißleiter, auch NTC-Widerstand (NTC - Negative Temperature Coefficient) genannt. Das Temperatursensorelement 30 umfasst beispielsweise einen glasbeschichteten Heißleiter. Alternativ kann das Temperatursensorelement 30 einen mit Epoxidharz beschichteten Heißleiter umfassen.

### Bezugszeichenliste

- 1: Anlegetemperaturmessfühler
- 3: Anlegekörper
- 5: Spannklemme
- 7: Prüfkörper
- 9: Rohr
- 13: Steckergehäuse
- 15: Kontaktstifte
- 30: Temperatursensorelement
- 31: Bodenwandung
- 33: Wärmeleitblech
- 35: Hohlraum
- 37: Halteklammer
- 39: Wärmeleitpad

## Patentansprüche

1. Anlegetemperaturmessfühler (1) mit einem Anlegekörper (3), wobei der Anlegekörper (3) aufweist
- eine Bodenwandung (31) zum Anlegen des Anlegetemperaturmessfühlers (1) an einen Prüfkörper (7)
- ein Wärmeleitblech (33) oder eine Wärmeleitfolie, das beziehungsweise die auf einer dem Prüfkörper (7) zugewandten Seite der Bodenwandung (31) angeordnet ist und derart ausgebildet ist, dass es beziehungsweise sie sich bei einem Anlegen des Anlegekörpers (3) an das Prüfobjekt an eine Oberflächenform des Prüfkörpers (7) anpasst,
- ein Temperatursensorelement (30), **dadurch gekennzeichnet, dass** der Anlegekörper aufweist
- ein Wärmeleitpad (39), das angeordnet und ausgebildet ist, das Temperatursensorelement (30) und das Wärmeleitblech (33) thermisch zu koppeln, wobei das Wärmeleitpad (39) jeweils direkt thermisch gekoppelt ist mit dem Wärmeleitblech (33) und dem Temperatursensorelement (30).

2. Anlegetemperaturmessfühler (1) nach Anspruch 1,
bei dem das Temperatursensorelement (30) eingesteckt ist in das Wärmeleitpad (39).

3. Anlegetemperaturmessfühler (1) nach Anspruch 1 oder 2, bei dem
- der Anlegekörper (3) einen Hohlraum (35) mit einer Öffnung aufweist,
- die Öffnung in der Bodenwandung (31) angeordnet ist und zumindest teilweise von dem Wärmeleitblech (33) abgedeckt wird,
- das Temperatursensorelement (30) und das Wärmeleitpad (39) zumindest teilweise in dem Hohlraum (35) angeordnet sind und
- das Temperatursensorelement (30) zu einem Teil direkt von dem Wärmeleitpad (39) umgeben ist und ansonsten in dem Hohlraum (35) von Luft umgeben ist.

4. Anlegetemperaturmessfühler (1) nach einem der vorstehenden Ansprüche,
wobei das Temperatursensorelement (30) einen Heißleiter umfasst.

5. Anlegetemperaturmessfühler (1) nach einem der vorstehenden Ansprüche,
wobei das Temperatursensorelement (30) einen glasbeschichteten oder einen epoxidharzbeschichteten Heißleiter umfasst.

6. Anlegetemperaturmessfühler (1) nach einem der vorstehenden Ansprüche,
bei dem das Wärmeleitblech (33) vorgebogen ist, so dass es eine Rundung mit einem vorgegebenen Radius aufweist, und Federeigenschaften aufweist.

7. Anlegetemperaturfühler (1) nach einem der vorstehenden Ansprüche aufweisend eine Halteklammer für den Heißleiter,
die in dem Hohlraum (35) des Anlegekörpers (3) angeordnet ist und die angeordnet und ausgebildet ist, das Temperatursensorelement (30) in einer vorgegebenen Position zu halten.

8. Anlegetemperaturfühler (1) nach Anspruch 7,
bei dem die Halteklammer federnd ausgebildet ist.

## Claims

1. Contact temperature sensor (1) having a contact body (3), wherein the contact body (3) comprises
- a bottom wall (31) by which the contact temperature sensor (1) is brought into contact with a test piece (7),
- a heat-conducting metal sheet (33) or a heat-conducting foil, which is arranged on a side of the bottom wall (31) facing towards the test piece (7) and is configured such that it conforms to a surface shape of the test piece (7) when the contact body (3) is brought into contact with the test object,
- a temperature sensor element (30), **characterized in that** the contact body comprises
- a heat-conducting pad (39), which is arranged and configured to thermally couple the temperature sensor element (30) and the heat-conducting metal sheet (33), the heat-conducting pad (39) being in each case directly thermally coupled to the heat-conducting metal sheet (33) and the temperature sensor element (30).

2. Contact temperature sensor (1) according to claim 1,
in which the temperature sensor element (30) is inserted in the heat-conducting pad (39).

3. Contact temperature sensor (1) according to claim 1 or 2, in which
- the contact body (3) comprises a cavity (35) with an opening,
- the opening is arranged in the bottom wall (31) and is at least partly covered by the heat-conducting metal sheet (33),
- the temperature sensor element (30) and the heat-conducting pad (39) are arranged at least partly in the cavity (35) and
- the temperature sensor element (30) is in part surrounded directly by the heat-conducting pad (39) and is otherwise surrounded by air in the cavity (35).

4. Contact temperature sensor (1) according to one of the preceding claims,
wherein the temperature sensor element (30) comprises a thermistor.

5. Contact temperature sensor (1) according to one of the preceding claims,
wherein the temperature sensor element (30) comprises a glass-coated or an epoxy-resin-coated thermistor.

6. Contact temperature sensor (1) according to one of the preceding claims,
in which the heat-conducting metal sheet (33) is pre-bent such that it has a curvature with a predefined radius and has spring properties.

7. Contact temperature sensor (1) according to one of the preceding claims comprising a retaining clip for the thermistor, which is arranged in the cavity (35) of the contact body (3) and which is arranged and configured to hold the temperature sensor element (30) in a predefined position.

8. The contact temperature sensor (1) according to claim 7,
in which the retaining clip has a resilient configuration.

## Revendications

1. Sonde de température de contact (1) présentant un corps de contact (3), le corps de contact (3) présentant
- une paroi de fond (31) destinée à mettre en contact la sonde de température de contact (1) contre une éprouvette (7)
- une tôle thermoconductrice (33) ou une feuille thermoconductrice qui est agencée sur une face, orientée vers l'éprouvette (7), de la paroi de fond (31) et conçue de manière telle qu'elle s'adapte, lors du contact du corps de contact (3) contre l'objet de test, à une forme de surface de l'éprouvette (7),
- un élément capteur de température (30), **caractérisée en ce que** le corps de contact présente
- un pad thermique (39) qui est agencée et conçue pour coupler thermiquement l'élément capteur de température (30) et la tôle thermoconductrice (33), la piste thermoconductrice (39) étant à chaque fois couplée thermiquement directement avec la tôle thermoconductrice (33) et l'élément capteur de température (30).

2. Sonde de température de contact (1) selon la revendication 1,
l'élément capteur de température (30) étant enfiché dans le pad thermique (39).

3. Sonde de température de contact (1) selon la revendication 1 ou 2,
- le corps de contact (3) présentant une cavité (35) pourvue d'une ouverture,
- l'ouverture étant agencée dans la paroi de fond (31) et recouverte au moins partiellement par la tôle thermoconductrice (33),
- l'élément capteur de température (30) et le pad thermique (39) étant agencés au moins partiellement dans la cavité (35) et
- l'élément capteur de température (30) étant en partie entouré directement par le pad thermique (39) et pour le reste entouré d'air dans la cavité (35).

4. Sonde de température de contact (1) selon l'une quelconque des revendications précédentes,
l'élément capteur de température (30) comprenant un conducteur de chaleur.

5. Sonde de température de contact (1) selon l'une quelconque des revendications précédentes,
l'élément capteur de température (30) comprenant un conducteur de chaleur revêtu de verre ou revêtu d'une résine époxyde.

6. Sonde de température de contact (1) selon l'une quelconque des revendications précédentes,
la tôle thermoconductrice (33) étant précintrée, de telle sorte qu'elle présente un arrondi d'un rayon prédéfini ainsi que des propriétés élastiques.

7. Sonde de température de contact (1) selon l'une quelconque des revendications précédentes, présentant une pince de maintien pour le conducteur de chaleur, qui est agencée dans la cavité (35) du corps de contact (3) et agencée et conçue pour maintenir l'élément capteur de température (30) dans une position prédéfinie.

8. Sonde de température de contact (1) selon la revendication 7,
dans laquelle la pince de maintien est conçue de manière élastique.
